# EUROPEAN PATENT APPLICATION

(11) **EP 1 739 536 A1**
(43) Date of publication of application: **03.01.2007**
(21) Application number: 05291387.8
(22) Date of filing: 28.06.2005
(51) Int. Cl.: G06F 3/12

(54) **Method and system for managing documents distributed on a network**

(71) Applicant: JetCAPS International Business Strategy SAS, 75116 Paris (FR)
(72) Inventor: D'Estalenx, Jean-François, 75116 Paris (FR)
(74) Representative: Texier, Christian

(57) **Abstract**

The invention relates to a method for enabling a user (U) to manage files distributed on servers (S1, S2, S3, S4) of a network (1), characterized in that
- a specific peripheral (P1) is selected by the user (U) from a plurality of peripherals (P1, P2, P4, C) connected to the network (1);
- the specific peripheral (P1) identifies itself to a specific server (S1);
- the specific server (S1) identifies itself to a database (100) to which the servers (S1, S2, S3, S4) are connected;
- the database (100) sends a list of the files distributed on the servers (S1, S2, S3, S4) to the specific peripheral (P1) via the specific server (S1);
- the user requests files to be processed in the network;
- the specific peripheral (P1) sends the processing requests to the specific server (S1); and
- the specific server (S1) sends a respective processing request relative to a file to a server (S1, S2, S3, S4) on which the file is stored, the sending being sequentially repeated for all the files chosen by the user.

The invention relates as well to a system for the processing of the method.

## Description

### FIELD OF THE INVENTION

The present invention relates to a method for enabling a user of a peripheral connected to a network to manage files distributed on servers of the network.

The invention also relates to a system processing the method.

### BACKGROUND OF THE INVENTION

US 6 889 252 discloses a network peripheral access method and system.

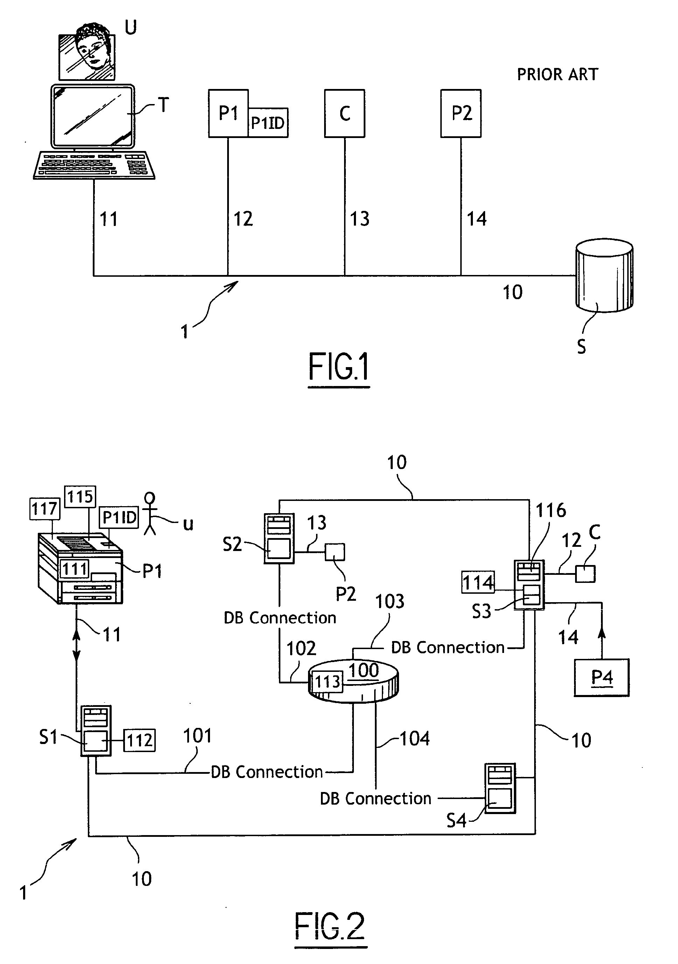

As shown in Fig. 1, in that method, a device T on a network 1 registers with a server S that peripheral access requests of a specific type be directed to a specific peripheral P1. A number of peripherals P1 and P2 and/or computers C, at least the terminal T of a user U and the server S are connected to the network 1 by network branches 10, 11, 12, 13 and 14.

The terminal T belongs to the user U and is personal to him (which means that the user knows a secret code to start a session with the terminal and use it).

When the device T creates an output request of the specified type, rather than sending the request directly to the peripheral P1, the device T sends the request to the server S.

An output request as generated by the device T basically comprises:
- information identifying the device T,
- information defining the data to be edited on a peripheral (i.e. data content and arrangement, in the form e.g. of a data file), as well as
- parameters concerning the graphical edition (printing or other) to be performed.

The server S receives the request, associates the request with the peripheral P1 registered for that request. The server S then sends the request to the registered peripheral P1.

In an alternate embodiment, the device T sends an abbreviated request to the server S, the server S responds with an access identifier (e.g. a network address) of the registered peripheral P1, and the device T sends the request directly to the registered peripheral P1.

The user U can easily change from the specific peripheral P1 to another specific peripheral - P2 for instance - via the server S. The presence of the server decreases the amount of peripheral-specific configuration information kept on the requesting device.

The method and system of US 6 889 252 is well adapted for output requests sent from a single terminal T - that is personal to the user ― and for the output of a small number of files, stored on a relatively small number of peripherals of the network.

The method and system of the prior art disclosed in US 6 889 252 have however drawbacks.

These drawbacks are apparent when the user U wants to output a large number of files on a specific peripheral device belonging to the network, the network comprising a large number of peripheral devices or servers on which the large number of files are stored and distributed.

The drawbacks are also apparent when the output request is not sent from the personal terminal T, but from the specific peripheral device.

Although Fig. 1 schematically shows a relatively small number of peripherals and/or computers and/or servers, the network 1 can comprise a large number of such peripherals and/or computers and/or servers and branches. The network 1 may comprise private and/or public parts (including parts of the Internet). All the elements of the network can be spatially gathered within a same building, or scattered across different premises. It is the case, for instance, for a global network in an international company.

The user U for instance identifies himself on a specific peripheral of the network (which means that the user knows a secret code to start a session with the peripheral and use it) or via the terminal T. The specific peripheral on which the user U identifies himself can be a peripheral such as a printer (P1 or P2), a photocopier or a fax, a computer, a projector, etc. He then requests, from the specific peripheral or from the terminal T, the output, on the specific peripheral, of some of his files. The files may be chosen among all types of files (such as audio files, pictures, video files, editable documents, data, etc.) and some of them may be big-sized.

Problems occur when his files are distributed on a large number of peripherals or servers of the network. The files corresponding to the requests are indeed sent to the specific peripheral from all the peripherals or servers at the same time and put on a waiting list by the specific peripheral.

Firstly, the time to output the files can be really long for the user, especially for the big-sized files, because of jams on the network.

Secondly, if a large number of files are sent, from a large number of peripheral devices or servers at the same time, to the specific peripheral (especially if the peripheral is a printer, a photocopier, a fax or a projector), the output of the n^{th} request will not be dealt with by the specific peripheral before the output of the n-1^{th} request is finished. This provokes the loss of the connection between the peripherals or servers after a time-out. The loss of the connection prevents the specific peripheral to output the n^{th} and following files. The sending of all the files at the same time creates a bottleneck on the specific peripheral and jams and stress on the network.

Thirdly, the list of the files of the user displayed on the specific peripheral or the terminal is not always up-to-date. This may provoke bugs on the specific peripheral or annoy the user.

Fourthly, some of the specific peripheral devices tend to output all the files belonging to the user, which is time-consuming and useless for the user.

### SUMMARY OF THE INVENTION

It is an object of the invention to mitigate at least one of the drawbacks of the prior art.

To do so, the invention proposes a method for enabling a user to manage files distributed on servers of a network according to claim 1.

The dependent method claims present advantageous ways to complete the method of claim 1.

The invention also relates to a system for carrying out the method.

The invention has numerous advantages.

The time to output each of the files is shorter than in the prior art, even for the big-sized files.

The files are not sent to the specific peripheral device at the same time by the peripherals or servers. The sending of the files to the specific peripheral is synchronized with the output of the request by the specific peripheral.

In other words, an n-1^{th} peripheral or server sends to the specific peripheral, on request, the file corresponding to the n-1^{th} request. The specific peripheral outputs this file. It is only when this n-1^{th} output is finished that the n^{th} peripheral or server sends to the specific peripheral the file corresponding to the n^{th} request. There is therefore no loss of the connection between the peripheral or server which must send the file and the specific peripheral. The sending of all the files is done sequentially, and therefore all the files to be output are actually safely output in the end up. There is no stress on the network.

A specific server manages the files, i.e. transfer and/or deletion and/or output between the peripherals or servers, on the network. There is back-up if the specific server fails.

A database keeps an updated list of all the files of the user. This database is informed of a sending, a transfer or a deletion of a file by the peripheral or server that actually sends, transfers or deletes the file. The list of the files, which can be displayed on the specific peripheral or the terminal via the specific server, is therefore always up-to-date.

The user outputs only the files that he wants or needs.

### BRIEF DESCRIPTION OF THE DRAWINGS

Other aspects, objects and advantages of the invention will be better apparent on reading the following description of the invention, made with reference to the accompanying drawings in which:
- Figure 1, which has already been commented upon, is a schematic representation of a network for implementing the prior art method for using a selected peripheral device, network to which a number of peripherals and/or computers, and at least a user terminal and a server are connected;
- Figure 2 is a schematic representation of a network for implementing the invention, network to which a number of peripherals and/or computers, and at least a database and a specific server are connected; and
- Figure 3 is a diagram of the main steps performed by the method according to the invention ― this diagram containing different alternatives which can be selected by a user to implement the invention.

### DESCRIPTION OF PREFERRED EMBODIMENTS

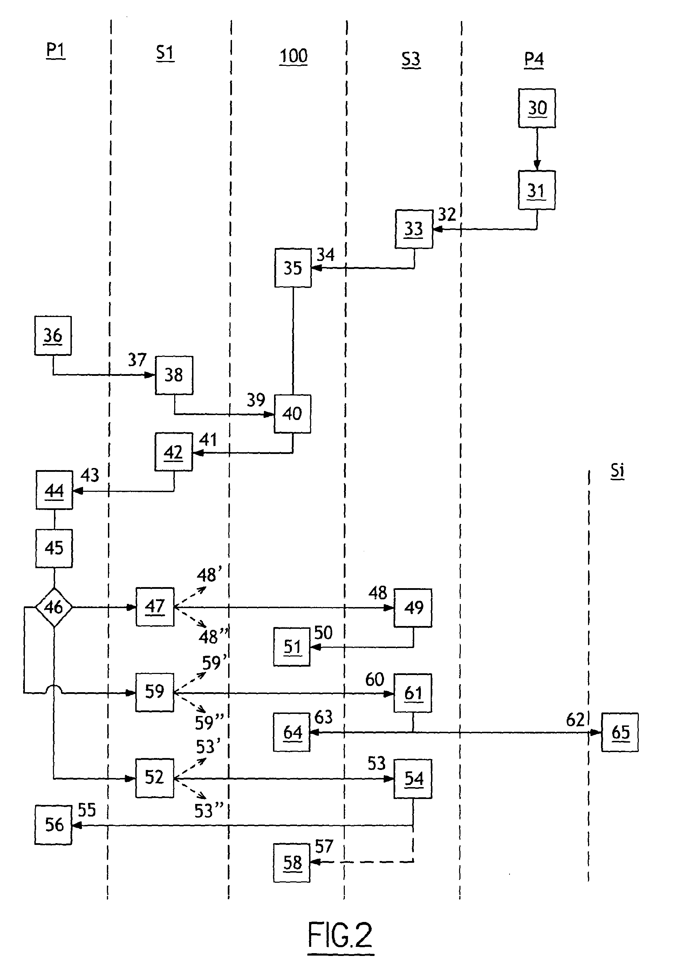

A schematic representation of a network 1 ― for instance a network of a public or private organization ― is shown in FIG. 2. The network 1 comprises a main branch 10 connecting servers S1, S2, S3, S4 which have memory means associated to them.

The server S1 is connected to a peripheral P1 by side branch 11. The server S2 is connected to a peripheral P2 by side branch 12, the server S3 is connected to the computer C by branch 12 and peripheral P4 by branch 14.

The network 1 may comprise private and/or public parts (including parts of the internet). All the elements of the network 1 can be spatially gathered within a same building, or scattered across different premises. The network can comprise a large number of branches, as well as a large number of connected peripherals (the simplified example of FIG.2 showing only three peripherals P1, P2, P4 and a computer C for clarity). The specific "shape" of the network is of course not a specific feature of the invention. The very schematic drawing of FIG. 2 is not limitative in that regard.

The servers S1, S2, S3, S4 operate the network 1. The servers S1, S2, S3, S4 are file servers and a number of files can be memorized on the servers. The servers S1, S2, S3, S4 may be integrated within a printer so as to be at the same time the server and the printer, or not. Some state of the arts printers indeed are configured to be at the same time a server. A server can also be integrated into any type of peripherals, in particular a peripheral able to perform a graphical or audio edition. It can be e.g. a projector, a photocopier, a telefax, a computer, a monitor or a TV.

A database 100 is connected to the server S1 by the database connection 101, to the server S2 by the database connection 102, to the server S3 by the database connection 103 and to the server S4 by the database connection 104.

In Fig.2, a user U is also represented.

Starting from a situation where the user U wishes to manage a great number of files distributed on the servers of the network 1, it will now be described in reference to FIG. 3 how the invention allows such management to be actually performed.

In the following description, some files will be output by the peripheral P1. In the following example, the peripheral P1 is a printer and the output is the printing of a file. Of course, the following description would also apply whatever peripheral (P2 or any other if available) the user wishes to select to perform the output. It could be any other type of peripherals or output as mentioned above.

In step 30, a peripheral P4 is connected to the server S3.

The peripheral P4 can be a computer or any device that can capture a file. The peripheral P4 can therefore be a scanner, a recorder, a video camera, etc. The file that is captured can be therefore of any type, such as audiofile, picture, videofile, editable document, data, etc.

The peripheral P4 is connected to the server S3, which means that information identifying the user U in association with information identifying the peripheral P4 and in the other hand the file captured by the peripheral is memorized in the memory means of the server S3, for instance in a table.

Information identifying the user U can be his network identity and/or his electronic certificate or electronic signature. Information identifying the peripheral can be its serial number and/or its electronic signature and/or an identification key.

This information is sent to the server S3 when the peripheral P4 identifies itself to the server S3. The peripheral P4 is known from the server S3. Methods to identify the peripheral P4 to the server S3 ― or other devices to a server or a database - are well known by the skilled in the art and will not be described in further details for clarity.

In step 31, the user U uses the peripheral P4 to capture a file.

In step 32 the captured file is sent to the server S3. Information identifying the user U in association with information identifying the file captured by the peripheral P4 is memorized in the memory means of the server S3, preferably in the same table as information identifying the peripheral.

Information identifying the file can be its name and/or its type and/or its size and/or its creation date and/or its expiry date.

In step 33, the file captured by the peripheral P4 is memorized in the memory means of the server S3, along with information identifying the file, the peripheral P4 and the user U.

The server S3 comprises information means 116 that are adapted to inform, in step 34, directly the database 100 of storage of the file by server S3.

In step 35, the database 100 stores the presence of files on the server S3 in a list.

The database 100 memorizes in the list the name and the characteristics of the files. The characteristics of the files can comprise:
- the name of the owner of the file, usually the user who created or captured the file;
- the location of the file in the network, i.e. the server on which the file is stored ;
- the type of the file (audiofile, picture, the videofile, editable document, data, etc.) ;
- the size of the file,
- the date of the creation of the file; and/or
- the expiry date of the file.

The list of the database can comprise as well information about the users having available files on the network, the groups of users having available files on the network, the list of the servers authorized to communicate with the database, the list of the peripherals authorized to output files.

Information about the users having available files on the network can comprise:
- their network identity, and/or
- their electronic certificate or electronic signature.

Information about the groups of users having available files on the network can comprise:
- their network identity, and/or
- their electronic certificate or electronic signature.

Information about the list of the servers authorized to communicate with the database can comprise:
- their serial number, and/or
- their electronic signature and/or an identification key.

Information about the list of the peripherals authorized to output files can comprise:
- their serial number, and/or
- their electronic signature and/or an identification key.

In step 36, a specific peripheral P1 is selected by the user U from the plurality of peripherals connected to the network 1. In step 36, the user U asks for a list of a part or all his available files on the network. The user selects the specific peripheral which is to execute a file processing in the network, and wants to selects the files to process too.

The user can choose to select the peripheral P1 locally, i.e. through a selection action which is physically directly executed on P1.

In this first mode of selection, P1 is associated with identification means P1ID. The user provides the specific peripheral P1 with identification information relative to himself by a direct input on the identification means P1ID associated to P1. Identification relative to the user can be e.g. a string of characters which is personally associated to the user.

The identification device P1ID can be of any type, such as for example :
- a keypad for allowing the user to enter one or more identification code(s),
- a sensor able to sense a biometry information specific to the user. Such a sensor can be able to characterize a physical feature of the user such as his fingerprints, voice, eye, etc.
- a card reader for reading the identification information contained in a card personal to the user (card with a microchip which can be read with an electrical contact, or through contactless means such as e.g. a radiowave reader or an infrared reader of the identification device),
- an infrared receiver for receiving identification information which have been beamed by the user from a device personal to the user and having an infrared port (such as a portable telephone, a personal digital assistant...), using e.g. the keypad of said personal device, etc...

Any identification means can be used in the identification device. More generally, the identification device P11D can comprise means allowing unambiguous identification of the user and/or of the terminal.

The identification device P1ID can be physically integrated into the peripheral P1 (with a physical input interface accessible to the user for allowing him to enter the identification information). P1 can be e.g. a printer with an integrated identification device.

The identification device P1ID can also be physically separated from the peripheral P1.

In this case, either the identification device is exclusively dedicated to PI (and possibly bears a visual sign indicating this to the user), or the identification device can be associated with a number of different peripherals, but comprises means to allow the user to select one of these peripherals before entering the information identifying the user and/or his terminal. The identification device will then send to the server, along with said information identifying the user, information identifying the selected peripheral.

The user can choose to select the peripheral P1 not locally, i.e. through a selection action which is physically executed away from P1.

The user can therefore connect a terminal T that is personal to him to the network 1 for establishing a connection between the terminal and the server S1. This connection can have been already established - it is possible that the terminal has been connected even before step 36. The connection to the server S1 through the network 1 can be replaced by a connection through any network common to the terminal and to the server S1.

When a network session has been initiated between the terminal and S1, the user selects the specific peripheral.

The user can browse a resource list from a display imported on his terminal screen from the server S1 to select the desired peripheral. Such a list can be logically organized and visually presented to the user, in different ways. A possible solution for this would be to have the display of the different peripherals which can be selected by the user be organized as a geographical representation of the actual spatial distribution of the peripherals across the network. In this case, the display of the list would represent the different buildings covered by the network 1, and prompt the user for selecting one of these buildings. Then the display could show the user a representation of the chosen building with its different areas, floors, etc. And here again, the user would be prompted to choose one of these. Finally, the display could show the different rooms available within the chosen area/floor, and indicate which peripherals can be selected within these rooms. The user would be prompted again for choosing a peripheral. For avoiding any ambiguity on the peripheral to be selected, the display could even show an image (e.g. a picture) of the selected peripheral, said picture representing the peripheral in its real physical environment (in the room). This would constitute a very ergonomic and natural interface means for guiding the user in order to help him select the right peripheral next to him, or anywhere in the network (the user might want to select e.g. his own printer located in his office, while he is away from his office). And the number of successive displays offering "zooms" at different levels of detail, on different parts of the network, can be adapted.

Other types of representation of the peripherals of the network can of course be used.

Indeed, the role of the selection of P1, from remote or on P1ID, is to allow the specific peripheral P1 to receive identification information about and from the user U.

In step 37, the specific peripheral P1 identifies itself to S1 by transmitting information identifying the selected peripheral P1 to S1, thanks to declaration means 111. P1 transmits the identification information about the user to the server S1. The information identifying the user can be transmitted by P1ID which is connected to the network 1 via the peripheral P1 for instance.

As said above, the information identifying the peripheral P1 can be, e.g., the network address of the peripheral in network 1. It can be expressed as a URL (Universe Resource Locator) or as an IP (Internet Protocol) address. It can be as well a serial number.

As said above too, the identification information entered into the identification device is specific to the user and/or to the terminal T.

In step 38, the server S1 becomes the specific server of the specific peripheral P1 and will manage the file processing of the files. Indeed, the purpose of the selection and identification step 36 is to update, in step 38, a table of the memory means of the server S1. From step 38 on, S1 will manage the files distributed on the servers of the network for the user.

Preferably, server S1 is the closest server to the specific peripheral P1 on the network.

In step 39, the specific server S1 identifies itself to the database 100. This identification is done thanks to process means 112.

In step 40, the database 100 knows that server S1 is the specific server for the user using the peripheral P1. The purpose of the selection and identification step 39 is to update, in step 40, a table of the memory means of the database 100.

In step 41, the database 100 sends, to the server S1, the list of the files of the user. This is done by sending means 113 of the database.

In step 42, server S1 receives the list from the database 100, and processes this list as asked in step 36.

The list of the files can be exhaustive or adapted to the list request of step 36, i.e. only contain a certain type of files. Preferably, the list of the files comprises only the files compatible with P1.

In step 43, S1 sends the list to P1.

In step 44, P1 receives the list. The list is displayed on display means 115.

The compatible-file-only list prevents the displaying, on display means 115 of P1, of a too large list on the peripheral P1. For instance, if P1 is a projector, the file that would be preferably apparent on the list given by the database could be the pictures, the audio files and the video files. If P1 is a printer, the list would only comprise the editable files and the pictures.

Parameters enable the user to choose the order of the display of the files of the list. The files can therefore be displayed in the list in alphabetical or chronological order for instance.

The peripheral P1 comprises selection means 117 adapted to point and click, for instance a mouse. The selection means 117 can comprise a keyboard and/or a vocal device. The selection means 117 can be used in cooperation with the display means 115. The means 117 can be used in cooperation with the identification means P1ID.

In step 45, from the list, the user requests to process selected files in the network, thanks to the selection means 117.

Step 46 shows that there are three possible solutions of file processing for the method of the invention.

The processing request can be an output request of a file on the specific peripheral P1. In that case, the user U wants to output, e.g. print, a file on the peripheral P1. If the file processing request is a transfer request, the request is sent by P1 to S1, and S1 proceeds to step 52.

The processing request can be a transfer request of a file from a server to another server on the network. In that case, the user wants to move a file from the memory means of a server to other memory means of another server on the network, for instance a server which is geographically closer to P1. If the file processing request is a transfer request, the request is sent by P1 to S1, and S1 proceeds to step 59.

The processing request can be as well a deletion request of a file from a server. In that case, the user wants to delete a file that is no use to him from the memory means of a server. If the file processing request is a deletion request, the request is sent by P1 to S1, and S1 proceeds to step 47.

In step 48, subsequent to step 47, the specific server S1 sends the processing request relative to the file to delete to the server on which the file is stored ― in that example the user U wants to delete the file captured by P4 and the deletion request is sent to S3.

In step 49, the server S3 deletes the file from its memory means.

In step 50, subsequent to step 49, transfer means 114 of S3 are adapted to inform directly the database 100 of the deletion of the file from said server, in order to keep the list of the files of the database updated.

In step 41, the database is updated and the deleted file is deleted from the list.

In step 60, subsequent to step 59, the specific server S1 sends the processing request relative to the file to transfer to the server on which the file is stored ― in that example the user U wants to transfer the file captured by P4 and the transfer request is sent to S3.

In step 61, the server S3 takes into account this request.

In step 62, S3 transfers the file to the server Si, i being 1, 2 or 4. S3 can also delete the file from its memory means after the transfer of the file.

In step 65, Si memorizes the file on its memory means.

In step 63, subsequent to step 62, transfer means 114 of S3 are adapted to inform directly the database 100 of transfer and/or the deletion of the file from said server, in order to keep the list of the files of the database updated.

In step 64, the database 100 is updated ― the location of the file is modified - and the deleted file is deleted from the list.

In step 53, subsequent to step 52, the specific server S1 sends the output request to the server on which the file is stored ― in that example the user U wants to output the file captured by P4 and the transfer request is sent to S3.

In step 54, the server S3 takes into account this request and the server S3 sends directly to the peripheral P1 the file to output thanks to transfer means 114. The file can be deleted from S3 after its sending from S3 to P1. The server S3 can keep a copy of the file on its memory means.

In step 56, P1 outputs the file.

In step 57, which is optional but preferred if the file is deleted after being sent, the database 100 is informed of the output of the document on the specific peripheral P1 and/or the deletion of the file from S3.

In step 58, the database updates the list of the documents.

As showed by broken arrows 48', 48", 59', 59", 53' and 53", the processing requests are sent by S1 sequentially to the servers of the network concerned by a file processing. In other words, the specific server S1 sends a respective processing request relative to a file to a server on which the file is stored only when the preceding processing request to a server is finished. S1 waits for a confirmation of end of processing by and from S3 to continue the dispatching of the processing requests to the other servers. Of course, S1 sequentially waits for a confirmation from each server to continue to send a processing request to another server.

The specific server S1 controls therefore the workflow of documents sent to peripheral P1 and avoids the stress on the network.

If the specific server S1 does not respond, during a step of the method for instance, then another server of the network can process the request and become the specific server for the specific peripheral P1 instead of S1.

If the connection between a server and the database 100 is lost, then the specific server S1 automatically synchronizes its information with the information contained in the database during the first reconnection.

A utility program enables as well to launch the synchronizing of the database 100 with the list of all the files stored on the servers declared to the database.

## Claims

1. A method for enabling a user (U) to manage files distributed on servers (S1, S2, S3, S4) of a network (1), **characterized in that**
- a specific peripheral (P1) is selected by the user (U) from a plurality of peripherals (P1, P2, P4, C) connected to the network (1);
- the specific peripheral (P1) identifies itself to a specific server (S1);
- the specific server (S1) identifies itself to a database (100) to which the servers (S1, S2, S3, S4) are connected;
- the database (100) sends a list of the files distributed on the servers (S1, S2, S3, S4) to the specific peripheral (P1) via the specific server (S1);
- the user requests files to be processed in the network;
- the specific peripheral (P1) sends the processing requests to the specific server (S1); and
- the specific server (S1) sends a respective processing request relative to a file to a server (S1, S2, S3, S4) on which the file is stored, the sending being sequentially repeated for all the files chosen by the user.

2. A method according to the preceding claim, wherein the processing request is:
- an output request of a file on the specific peripheral (P1); and/or
- a transfer request of a file from a server (S1, S2, S3, S4) to another server (S1, S2, S3, S4); and/or
- a deletion request of a file from a server (S1, S2, S3, S4).

3. A method according to any of the preceding claims, wherein a server (S1, S2, S3, S4) informs directly the database (100) of the deletion of a file from said server, in order to keep the list of the files of the database (100) updated.

4. A method according to any of the preceding claims, wherein a server (S1, S2, S3, S4) informs directly the database (100) of the transfer of a file from said server to another server, in order to keep the list of the files of the database (100) updated.

5. A method according to any of the preceding claims, wherein a server (S3) on which the file is stored sends a file to output on the specific peripheral (P1) directly to the specific peripheral (P1).

6. A method according to the preceding claim, a server (S1, S2, S3, S4) informs directly the database (100) of the sending of a file from said server to the specific peripheral (P1), in order to keep the list of the files of the database (100) updated.

7. A method according to any preceding claim, wherein of the list of the files comprises the names and the characteristics of the files.

8. A method according to any preceding claim, wherein the specific server (S1) sends a respective processing request relative to a file to a server (S1, S2, S3, S4) on which the file is stored only when the preceding processing request to a server is finished.

9. A method according to any of the preceding claims, wherein the peripherals (P1, P2, P4, C) store the captured files on a server (S1, S2, S3, S4) of the network.

10. A method according to the preceding claim, wherein said server (S1, S2, S3, S4) informs directly the database (100) of the storage of a file by said server, in order to keep the list of the files of the database (100) updated.

11. A method according to any of the preceding claims, wherein another server of the network can process the request and become the specific server for the specific peripheral if the previously selected specific server S1 does not respond.

12. A method according to any of the preceding claims, wherein, if the connection between a server and the database (100) is lost, the specific server (S1) automatically synchronizes its information with the information contained in the database during the first reconnection.

13. A method according to any of the preceding claims, comprising a synchronizing of the database (100) with the list of all the files stored on servers declared to the database.

14. A system for enabling a user (U) to manage files on a network (1), comprising:
- servers (S1, S2, S3, S4) connected to the network (1), servers on which the files are distributed,
- a plurality of peripherals (P1, P2, P4, C) connected to the network (1)
- a specific peripheral (P1), the specific peripheral comprising identification means (P1ID, T) for enabling the user (U) to select said specific peripheral (P1) from the plurality of peripherals and declaration means (P1ID, 111) for identifying itself to a specific server (S1) from the servers;
**characterized in that**
- the specific server (S1) comprises process means (112) for identifying itself to a database (100) to which the servers (S1, S2, S3, S4) are connected;
- the database (100) comprises sending means (113) for sending a list of the files distributed on the servers (S1, S2, S3, S4) to the specific peripheral (P1) via the specific server (S1);
- the specific peripheral (P1) comprises selection means (117, P1ID) for requesting files to be processed on the network;
- the process means (112) of the specific peripheral (P1) are adapted to send the processing requests to the specific server (S1), and to send a respective processing request relative to a file to a server (S1, S2, S3, S4) on which the file is stored, the sending being sequentially repeated for all the files chosen by the user.

15. A system according to the preceding claim, wherein a server comprises transfer means (114) for sending a file to the specific peripheral (P1) and/or transferring a file to another server (S1, S2, S3, S4) and/or deleting a file from a server (S1, S2, S3, S4).

16. A system according to the preceding claim, wherein said transfer means (114) are adapted to inform directly the database (100) of the sending and/or transfer and/or deletion of a file from said server, in order to keep the list of the files of the database (100) updated.

17. A system according to any of the three preceding claims, wherein the process means (112) are adapted to send a respective processing request relative to a file to a server (S1, S2, S3, S4) on which the file is stored only when the preceding processing request to a server is finished.

18. A system according to any of the four preceding claims, wherein a server (S3) comprises information means (116) to inform directly the database (100) of storage of a file by said server, in order to keep the list of the files of the database (100) updated.

19. A system according to any of the five preceding claims, wherein the selection means (117, P1ID) comprise means adapted to point-and-click and/or a keyboard and/or a vocal device.
